# EUROPÄISCHE PATENTANMELDUNG

(11) **EP 2 157 056 A1**
(43) Veröffentlichungstag der Anmeldung: **24.02.2010**
(21) Anmeldenummer: 09010339.1
(22) Anmeldetag: 11.08.2009
(51) Int. Cl.: C02F 3/12

(54) **Verfahren und Vorrichtung zur Aufbereitung von Grauwasser**

(30) Priorität: 18.08.2008 DE 102008038287; 02.10.2008 DE 102008049970
(71) Anmelder: Dehoust GmbH, 69181 Leimen (DE)
(72) Erfinder: Dehoust, Wolfgang, 69120 Heidelberg (DE)
(74) Vertreter: Naumann, Ulrich

(57) **Zusammenfassung**

Ein Verfahren zur Aufbereitung von Grauwasser zu Klarwasser, wobei das Grauwasser einer Behandlung, insbesondere einer biologischen Reinigung, und darauf folgend einem Filtrationsschritt unterzogen wird, ist im Hinblick auf eine ökonomische, platzsparende und gleichzeitig effektive Aufbereitung **dadurch gekennzeichnet, dass** der Filtrationsschritt unter Nutzung des hydrostatischen Druckes des gespeicherten und/oder behandelten Grauwassers erfolgt. Des Weiteren ist eine Vorrichtung zur Aufbereitung von Grauwasser zu Klarwasser mit einem Grauwasserbehälter (1) zur Speicherung und/oder Vorklärung von Grauwasser und einer Filtereinrichtung (9) für das ggf. vorgeklärte Grauwasser angegeben, bei der die Filtereinrichtung (9) unter Nutzung des hydrostatischen Druckes im Grauwasserbehälter (1) betreibbar ist.

## Beschreibung

Die vorliegende Erfindung betrifft ein Verfahren zur Aufbereitung von Grauwasser zu Klarwasser, wobei das Grauwasser zunächst einer Behandlung, insbesondere einer biologischen Reinigung, und darauf folgend einem Filtrationsschritt unterzogen wird.

Des Weiteren betrifft die Erfindung eine Vorrichtung zur Aufbereitung von Grauwasser zu Klarwasser, mit einem Grauwasserbehälter zur Speicherung und/oder Behandlung von Grauwasser, und einer Filtereinrichtung für das ggf. behandelte Grauwasser.

Als Grauwasser wird im Allgemeinen der Teil des nur leicht belasteten häuslichen Abwassers bezeichnet, der bspw. aus Dusche, Badewanne, Handwaschbecken und ggf. auch aus Wasch- und Spülmaschine stammt. Dieses nur leicht belastete Abwasser kann im Haushalt eine tägliche Menge von ca. 55I pro Person betragen.

In herkömmlicher Weise wird das schwach belastete Grauwasser zusammen mit stark belasteten Abwässern, bspw. aus der Toilette, der Kanalisation bzw. der kommunalen Abwasserklärung zugeführt. Es ist jedoch im Hinblick auf die Schonung natürlicher Ressourcen und auch im Hinblick auf wirtschaftliche Belange zu bevorzugen, Grauwasser wieder aufzubereiten und einer weiteren Verwendung zuzuführen. So lässt sich wiederaufbereitetes Grauwasser in besonders geeigneter Weise als Spülwasser für Toiletten benutzen. Des Weiteren kann wiederaufbereitetes Grauwasser ggf. zur Pflanzenbewässerung verwendet werden. In solcher Hinsicht behandeltes Grauwasser wird als Brauch-, Betriebs- oder Klarwasser bezeichnet.

Aufbereitetes Klarwasser sollte in hygienischer und mikrobieller Hinsicht einwandfrei sein. Des Weiteren sollte das Klarwasser farblos, geruchsneutral und schwebstofffrei sein. Schließlich ist erwünscht, dass das aufbereitete Klarwasser mehrere Wochen lagerfähig ist, ohne danach eine nennenswerte mikrobielle Kontamination aufzuweisen.

Eingangs genannte Verfahren und Vorrichtungen zur Aufbereitung von Grauwasser zu Klarwasser sind bereits in verschiedenen Ausführungen bekannt. Dabei wird das anfallende Grauwasser im Allgemeinen zunächst gespeichert, wobei während der Speicherung bereits eine Behandlung des Grauwassers erfolgen kann. Oft handelt es sich dabei um eine biologische Reinigung, welche unter aeroben oder anaeroben Bedingungen ablaufen kann.

Dabei sorgen aquatische Mikroorganismen für den Abbau der organischen Inhaltsstoffe. Die entstehenden Sedimente setzen sich auf dem Behälterboden ab und können regelmäßig abgelassen werden.

Üblicherweise schließt sich an die Speicherung und/oder Behandlung des Grauwassers ein Filtrationsschritt an. Dabei werden verbliebene Schmutz- und Schwebteilchen mechanisch aus dem Grauwasser entfernt. Für den Filtrationsschritt sind bei den bekannten Vorrichtungen weitere Aggregate vorzusehen. So wird eine zusätzliche Filtereinrichtung verwendet. Des Weiteren muss eine Pumpe bereitgestellt werden, die das in der Filtereinrichtung entstehende Druckgefälle überwindet.

Insbesondere für den Fall, dass mit der Filtereinrichtung auch bakterielle und/oder virale Verunreinigungen entfernt werden sollen, ist ein Filter mit besonders kleinem Porendurchmesser, nämlich im µm-Bereich, vorzusehen (sog. Mikro- oder Ultrafiltration). Der entstehende Druckunterschied zwischen Ein- und Ausgang des Filters wird dementsprechend groß. Dadurch steigt die benötigte Pumpleistung an, die Investitions- und Betriebskosten erhöhen sich dementsprechend. Des Weiteren entwickelt die Anlage aufgrund der Vielzahl der Zusatzaggregate einen erhöhten Platzbedarf, der weit über denjenigen eines Behälters zum Speichern und/oder Behandeln des Grauwassers (Grauwasserbehälter) hinausgeht.

Der vorliegenden Erfindung liegt daher die Aufgabe zugrunde, eine Vorrichtung und ein Verfahren der eingangs genannten Art derart auszugestalten und weiterzubilden, dass eine ökonomische, platzsparende und gleichzeitig effektive Aufbereitung von Grauwasser realisiert ist.

Diese Aufgabe ist im Hinblick auf ein Verfahren mit den Merkmalen des Patentanspruchs 1 gelöst. Im Hinblick auf eine erfindungsgemäße Vorrichtung ist die Aufgabe mit den Merkmalen des Patentanspruchs 15 gelöst. Vorteilhafte Weiterbildungen des Erfindungsgedankens sind den jeweils nachgeordneten Patentansprüchen entnehmbar.

In erfindungsgemäßer Weise ist zunächst das eingangs genannte Verfahren derart weitergebildet und ausgestaltet, dass der Filtrationsschritt unter Nutzung des hydrostatischen Druckes des gespeicherten und/oder behandelten Grauwassers erfolgt.

Erfindungsgemäß ist erkannt worden, dass der hydrostatische Druck der Grauwassersäule in einem Behälter zur Speicherung und/oder Behandlung des Grauwassers gleichzeitig zur Bereitstellung eines in einer nachgeschalteten Filtereinrichtung anliegenden Druckgefälles genutzt werden kann.

Der für den Filtrationsschritt benötigte Druck des Mediums kann so teilweise oder - in bevorzugter Weise - vollständig von der Säule des gespeicherten Grauwassers bereitgestellt werden. Das erfindungsgemäße Verfahren erlaubt demnach, eine kleiner dimensionierte und damit sparsamere und platzsparendere Pumpeinrichtung für die Zuführung des Grauwassers zum Filtrationsschritt zu verwenden.

In besonders bevorzugter Weise kann sogar vollständig auf eine solche Pumpeinrichtung verzichtet werden, falls nämlich der benötigte Filtereingangsdruck vollständig von dem hydrostatischen Druck des gespeicherten Grauwassers bereitstellbar ist.

Zur Durchführung des erfindungsgemäßen Verfahrens kann die Filtereinrichtung im Innenraum des Grauwasserbehälters, und dort insbesondere auf dem Boden oder im Bodenbereich, angeordnet werden. So ist eine optimale Ausnutzung des hydrostatischen Druckes der Grauwassersäule verbunden mit einer optimalen Kompaktheit einer Aufbereitungsanlage realisiert.

Folglich ist ein Verfahren - und in diesem Zusammenhang auch eine Vorrichtung - zur Aufbereitung von Grauwasser zu Klarwasser angegeben, wobei eine ökonomische, platzsparende und gleichzeitig effektive Aufbereitung von Grauwasser realisiert ist.

Wie bereits erwähnt, ist eine Weiterbildung des erfindungsgemäßen Verfahrens bevorzugt, bei dem der Filtrationsschritt alleine unter Nutzung des hydrostatischen Druckes des gespeicherten und/oder behandelten Grauwassers erfolgt. Insoweit ist eine Vorrichtung verwendbar, bei der vollständig auf eine Pumpeinrichtung zur Speisung der Filtereinrichtung verzichtet werden kann.

Gemäß einer weiteren Ausführungsform des Verfahrens weist die Behandlung des Grauwassers eine biologische Reinigungsstufe, insbesondere eine aerobe biologische Behandlung, auf. Eine aerobe biologische Behandlung ist hinsichtlich einer Minderung der auftretenden Geruchsbelästigung gegenüber einem anaeroben Prozess zu bevorzugen. Die biologische Behandlung stellt eine besonders wirksame Entfernung organischer Verunreinigungen des Grauwassers dar. Hierzu geeignete Mikroorganismen sind dem Fachmann auf dem Gebiet der Klär- und/oder Aufbereitungsanlagen für verunreinigtes Wasser bekannt.

Hinsichtlich des Betrages und der Nachhaltigkeit des bereitgestellten hydrostatischen Druckes des Grauwassers ist eine Ausgestaltung bevorzugt, bei der das aufzubereitende Grauwasser zunächst zur Speicherung und/oder Behandlung in einen Grauwasserbehälter eingeleitet wird.

Dabei ist ein Verfahren bevorzugt, bei dem ein Grauwasserbehälter verwendet wird, in dessen Innenraum, insbesondere im unteren Bereich bzw. im Bodenbereich, eine Filtereinrichtung angeordnet ist. Mit anderen Worten ist hierdurch eine Weiterbildung des erfindungsgemäßen Verfahrens angegeben, welche vollständig auf die Verwendung einer externen Filtereinrichtung für das gespeicherte und/oder behandelte Grauwasser verzichten kann. Vielmehr weist die hier verwendete Vorrichtung eine integrierte Filtereinrichtung auf, wobei der Filtrationsschritt alleine unter Nutzung des hydrostatischen Druckes der über der Filtereinrichtung ausgebildeten Säule des Grauwassers erfolgen kann.

Sofern ein Grauwasserbehälter verwendet wird, ist hinsichtlich der Verhinderung einer Rückkontamination des Klarwassers bevorzugt, dass nach dem Filtrationsschritt erhaltenes Klarwasser direkt aus dem Grauwasserbehälter, insbesondere aus einer dort angeordneten Filtereinrichtung, entnommen und auf die Außenseite des Grauwasserbehälters geleitet wird. Mit anderen Worten ist eine Ausgestaltung des Verfahrens bevorzugt, bei der eine unmittelbar in der im Grauwasserbehälter integrierten Filtereinrichtung angeordnete Ableitung für das Klarwasser, welche auf die Außenseite des Grauwasserbehälters führt, verwendet wird.

Im Hinblick auf eine gründliche und schnelle Aufbereitung des Grauwassers wird eine Ausführungsform des Verfahrens vorgeschlagen, bei der das aufzubereitende Grauwasser vor der Speicherung und/oder Behandlung durch einen Vor- oder Grobfilter, insbesondere mit einer Siebnennweite von >1mm, geleitet wird. Bevorzugt werden mit Hilfe der sog. Lamellenspaltsiebtechnik grobe Inhaltsstoffe (wie Haare, Textilflusen) aus dem Grauwasser herausgefiltert. Dies garantiert eine hohe Betriebssicherheit aller nachfolgenden Anlagenkomponenten. Die Filterrückstände werden in regelmäßigen Zeitintervallen automatisch mittels Druckspülung von der Siebfläche in die Kanalisation ausgetragen. Das vorgereinigte Grauwasser wird dann dem Grauwasserbehälter zugeführt.

Dabei ist bevorzugt, dass der Filtrationsschritt eine Mikrofiltration oder Ultrafiltration aufweist. Insbesondere die Verwendung eines vorgeschalteten Grobfilters erlaubt es, für den nachgeschalteten Filtrationsschritt eine Filtereinrichtung mit sehr geringem Porendurchmesser zu verwenden. So können auch Bakterien und ggf. sogar Viren mechanisch aus dem vorgeklärten Grauwasser entfernt werden. Die verwendete Filtereinrichtung weist bevorzugt eine Porengröße von ca. 50 µm auf.

Im Hinblick auf ein effektives Verfahren ist des Weiteren eine Verfahrensführung bevorzugt, bei der das gespeicherte und/oder zu behandelnde und/oder behandelte Grauwasser und/oder eine für den Filtrationsschritt verwendete Filtereinrichtung belüftet werden. Eine solche Belüftung ist insbesondere vorteilhaft, falls eine biologische Behandlung unter aeroben Bedingungen durchgeführt wird. Eine Belüftung der Filtereinrichtung erweist sich als sinnvoll, um den entstehenden Filterkuchen periodisch zu entfernen und die Durchflussleistung der Filtereinrichtung (bspw. einer Membran) wiederherzustellen.

Des Weiteren hat sich als vorteilhaft erwiesen, die Filtration erst nach Abschluss der Behandlung, insbesondere einer biologischen Reinigung, durchzuführen. So sind Schwebstoffe und/oder organische Materialien bereits größtenteils aus dem Grauwasser entfernt, so dass diese nicht mehr unnötig der Filtereinrichtung zugeführt werden. Des Weiteren ist die organische Belastung des Grauwassers nach der biologischen Behandlung derart verringert, dass das Klarwasser ein deutlich geringeres Potential zur Wiederverkeimung besitzt und somit länger lagerfähig ist. Sofern eine biologische Behandlung in einem Grauwasserbehälter durchgeführt wird, ist ebenfalls für eine ausreichende Standzeit für den Inhalt des Grauwasserbehälters zu sorgen, damit die organische Belastung durch die eingesetzten Mikroorganismen abgebaut wird.

In einer weiteren bevorzugten Ausführungsform des Verfahrens wird der Filtrationsschritt in regelmäßigen Abständen unterbrochen. Dadurch wird eine "Entspannungszeit" für die Filtereinrichtung bereitgestellt, während derer die Filtereinrichtung regeneriert werden kann. Dies kann bspw. durch das vorgenannte Belüften und/oder auch durch eine Rückspülung erfolgen.

In einer weiteren vorteilhaften Ausführungsform des erfindungsgemäßen Verfahrens wird das Klarwasser in einen Klarwasserbehälter geleitet und dort gespeichert. So ist immer ein gewisser Vorrat an Klarwasser vorhanden, der je nach Bedarf verbraucht werden kann. Durch das erfindungsgemäße Verfahren ist sichergestellt, dass der Vorrat an Klarwasser ein so geringes Maß an Verunreinigungen aufweist, dass eine lange Lagerzeit problemlos darstellbar ist.

Zur Ergänzung des Vorrats an Klarwasser ist des Weiteren unter Berücksichtigung der DIN EN 1717 möglich, dem Klarwasserbehälter zusätzlich Regenwasser, insbesondere aus einem Regenwasserbehälter, und/oder Trinkwasser, insbesondere aus dem Trinkwassernetz, zuzuführen. Selbstverständlich ist dabei unter ökonomischen und ökologischen Gesichtspunkten bevorzugt, soweit als möglich Regenwasser zu verwenden.

Im Hinblick auf die Verwendung einer möglichst kompakten Vorrichtung im Rahmen des erfindungsgemäßen Verfahrens ist bevorzugt, dass Klarwasser aus dem Klarwasserbehälter durch eine im Innenraum, insbesondere auf dem Boden, des Klarwasserbehälters angeordnete Tauchpumpe gefördert wird. So ist ein Verfahren angegeben, bei dem Klarwasser mit einer im Klarwasserbehälter integrierten Pumpe förderbar und so den Verbrauchsstellen zuführbar ist. Die verwendete Vorrichtung weist folglich einen besonders geringen Platzbedarf auf.

Schließlich hat es sich als vorteilhaft erwiesen, für die Durchführung eines erfindungsgemäßen Verfahrens eine Steuerung mit festen oder variablen Steuerparametern zu verwenden. Die verwendete Steuerung kann bspw. einen Standby-Modus aufweisen, der von Hand einstellbar und/oder automatisch aktiviert wird, bspw. wenn der Wasserstand im Grauwasserbehälter unter einen Minimalfüllstand absinkt. In einem solchen Standby-Modus findet keine Filtration statt. Es ist jedoch vorteilhaft, falls die Belüfterpumpe im Grauwasserbehälter auch dann zyklisch aktiv ist. Dabei hat sich in einer Standardeinstellung ein Wechsel von ca. 2 Minuten Betriebszeit mit drauf folgenden ca. 4 Minuten Ruhezeit der Belüftung als vorteilhaft erwiesen.

Für längere Stillstandszeiten der Anlage kann des Weiteren ein "Urlaubsmodus" vorgesehen werden. Dabei können in einer Standardeinstellung einer Minute Belüftungszeit 9 Minuten Ruhezeit folgen.

Des Weiteren ist vorteilhaft, eine Steuerung zu verwenden, welche sicherstellt, dass neu zufließendes Grauwasser eine ausreichend lange Zeit im Grauwasserbehälter verbleibt, um eine wirksame biologische Behandlung stattfinden zu lassen. Befindet sich demnach der Füllstand im Grauwasserbehälter beim Minimalstand und fließt neues Grauwasser nach, so wird vorzugsweise ab einem Füllstand von ca. 10% in der Standardeinstellung ein 10-minütiger Countdown gestartet. Danach wird der Standby-Modus deaktiviert. Danach erlaubt die Steuerung das Starten des Filtrationsschrittes, um neues Klarwasser bereitzustellen.

Befindet sich der Füllstand im Grauwasserbehälter jedoch bereits über ca. 10%, so kann eine Steuerung verwendet werden, die auf Grund der Pufferwirkung des bereits vorbehandelten Grauwassers erlaubt, dass der Filtrationsschritt im Bedarfsfall direkt aktiviert werden kann.

In Bezug auf die Filtration selber ist die Verwendung einer Steuerung bevorzugt, bei der die voreingestellte Filtrationszeit ca. 4 Minuten beträgt. Danach schließt sich das Filtrationsventil für ein Entspannungsintervall von 30 Sekunden. Dabei kann die Belüftung weiter betrieben werden, um nämlich die Oberfläche der Filtereinrichtung (bspw. einer Membran) zu reinigen. Anschließend kann das nächste Filtrationsintervall von 4 Minuten Dauer beginnen.

Die vorzugsweise verwendete Steuerung kann den Beginn und das Ende des Filtrationsvorgangs vom Füllstand im Klarwasserbehälter und/oder im Grauwasserbehälter abhängig machen. Des Weiteren kann die Zudosierung von Regen- und/oder Trinkwasser zum Klarwasser vom Füllstand im Klarwasserbehälter abhängig gemacht werden.

Die erfindungsgemäße Vorrichtung zur Aufbereitung von Grauwasser zu Klarwasser ist so ausgestaltet und weitergebildet, dass die Filtereinrichtung unter Nutzung des hydrostatischen Druckes im Grauwasserbehälter betreibbar ist.

Im Hinblick auf einen ökonomischen Betrieb der erfindungsgemäßen Vorrichtung ist eine erste Ausführungsform bevorzugt, bei der die Filtereinrichtung alleine unter Nutzung des hydrostatischen Druckes im Grauwasserbehälter betreibbar ist.

Wie bereits in Bezug auf das Verfahren erwähnt, kann hierzu die Filtereinrichtung im Innenraum des Grauwasserbehälters, insbesondere in dessen Bodenbereich, angeordnet sein. Damit ist eine besonders kompakte Vorrichtung angegeben.

Die Filtereinrichtung kann einen Mikro- oder Ultrafilter aufweisen, um eine besonders zuverlässige mechanische Abtrennung von Verunreinigungen bereitzustellen. Dabei können Bakterien und/oder Viren abgeschieden werden.

Im Hinblick auf eine effektive Aufbereitung ist bevorzugt, dass die erfindungsgemäße Vorrichtung einen Grauwasserbehälter aufweist, in dem eine Behandlung, insbesondere eine biologische Reinigung, durchführbar ist.

Zur Abtrennung von groben Verunreinigungen kann, insbesondere im Zulauf für das Grauwasser, innerhalb des Grauwasserbehälters ein Vor- oder Grobfilter, insbesondere mit einer Siebnennweite von >1mm, angeordnet sein.

Im Hinblick auf eine wünschenswerte Nachhaltigkeit der Bereitstellung von Klarwasser kann die Vorrichtung des Weiteren einen mit dem Grauwasserbehälter korrespondierenden Klarwasserbehälter zur Speicherung des Klarwassers aufweisen, wobei der Klarwasserbehälter ggf. eine im Innenraum, insbesondere auf dem Boden, angeordnete Tauchpumpe zur Förderung des Klarwassers aufweist. Mit einer integrierten Tauchpumpe ist dabei ein besonders kompakter Klarwasserbehälter realisiert.

Im Hinblick auf eine optimale Nutzung vorhandener Ressourcen ist des Weiteren bevorzugt, dass mit der erfindungsgemäßen Vorrichtung auch Regenwasser nutzbar ist. Dazu kann die Vorrichtung des Weiteren einen Regenwasser-Sammelbehälter aufweisen, der mit dem Klarwasserbehälter so korrespondiert, dass bei Bedarf Regenwasser dem Klarwasser zumischbar ist. Sofern der Regenwasserbehälter niveaugleich mit dem Klarwasserbehälter angeordnet ist, kann dabei die Tauchpumpe im Klarwasserbehälter die Aufgabe einer Druckerhöhungsanlage für die Regenwassernutzungsanlage übernehmen. Daher muss im oder am Regenwasserbehälter keine eigene Pumpe mehr vorgesehen werden. Ist der Regenwasserbehälter unterirdisch angeordnet, kann eine weitere Tauchpumpe im Regenwasserbehälter vorgesehen sein, die bei Bedarf Regenwasser in den Klarwasserbehälter fördert. Durch die zusätzliche Nutzung von Regenwasser kann das Erfordernis einer Trinkwassernachspeisung zum Klarwasser auf ein Minimum reduziert werden.

Trotzdem ist im Hinblick auf eine möglichst durchgängige Einsatzbereitschaft der Vorrichtung bevorzugt, dass der Klarwasserbehälter einen Anschluss für die Zumischung von Trinkwasser aufweist, und insbesondere an das Trinkwassernetz angeschlossen ist. Dabei ist die DIN EN 1717 zu beachten.

In Bezug auf weitere Einzelheiten und Vorteile der vorgenannten Ausführungsformen der erfindungsgemäßen Vorrichtung sowie bezüglich weiterer vorteilhafter Weiterbildungen wird ausdrücklich auch auf die Ausführungen zu dem erfindungsgemäßen Verfahren verwiesen. So ist vom Erfindungsgedanken insbesondere auch eine Vorrichtung umfasst, welche die zuvor anhand des Verfahrens beschriebene Steuerung zur Durchführung einer Grauwasseraufbereitung aufweist.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung dreier bevorzugter Ausführungsbeispiele der erfindungsgemäßen Vorrichtung anhand der Zeichnung zu verweisen. In Verbindung mit der Erläuterung der bevorzugten Ausführungsbeispiele anhand der Zeichnung werden auch bevorzugte Ausgestaltungen und Weiterbildungen des erfindungsgemäßen Verfahrens erläutert. In der Zeichnung zeigen
- Fig. 1: eine schematische Darstellung einer ersten Ausführungsform der Vorrichtung mit einem Grauwasserbehälter und einem Klarwasserbehälter,
- Fig. 2: eine schematische Darstellung einer zweiten bevorzugten Ausführungsform der Vorrichtung, wobei zusätzlich ein niveaugleicher Regenwasserbehälter vorgesehen ist, und
- Fig. 3: eine dritte Ausführungsform der erfindungsgemäßen Vorrichtung, wobei hier im Unterschied zu Fig. 2 ein unterirdischer Regenwasserbehälter vorgesehen ist.

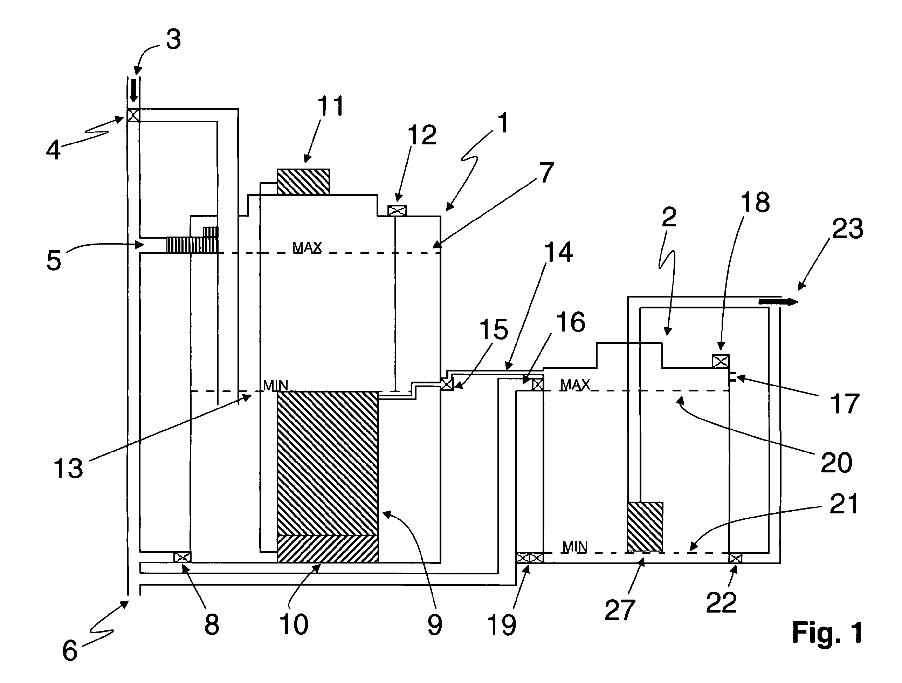

Fig.1 zeigt eine schematische Darstellung einer ersten Ausführungsform der erfindungsgemäßen Vorrichtung zur Aufbereitung von Grauwasser zu Klarwasser. Dazu ist zunächst ein Grauwasserbehälter 1 vorgesehen, der zur Speicherung und Behandlung, insbesondere einer biologischen Reinigung, des Grauwassers dient. Das aufbereitete Klarwasser wird dann in einen Klarwasserbehälter 2 geleitet und dort für eine Nutzung vorgehalten.

Das aufzubereitende Grauwasser wird über einen Grauwasserzulauf 3 in den Grauwasserbehälter 1 eingeleitet. Dabei wird das Grauwasser durch einen Grobfilter 4 geleitet, der grobe Verschmutzungen, insbesondere aber auch Haare, bereits aus dem Grauwasser entfernt.

Um eine Überfüllung des Grauwasserbehälters 1 zu verhindern, ist im Bereich des Grauwasserzulaufs 3 ein Überlaufbogen 5 vorgesehen, der in einen Kanalisationsanschluss 6 mündet. Bei Überschreiten des Maximalstandes 7 für den Grauwasserbehälter 1 wird weiteres Grauwasser automatisch über den Überlaufbogen 5 in die Kanalisation abgeleitet. Des Weiteren ist im Bodenbereich des Grauwasserbehälters 1 ein Auslaufhahn 8 vorgesehen, über den entstehende Sedimente bzw. abgelagerter Schlamm periodisch aus dem Grauwasserbehälter 1 entfernbar sind.

In erfindungsgemäßer Weise ist nun im unteren Bereich des Grauwasserbehälters 1 eine Filtereinrichtung 9 angeordnet, welche hier als Membranfilter ausgestaltet ist.

Der Membranfilter ist als sog. Ultrafilter mit einer Porengröße von ca. 50 µm ausgelegt.

Unterhalb der Filtereinrichtung 9, nämlich im Bodenbereich des Grauwasserbehälters 1, ist des Weiteren eine Belüftungseinrichtung 10 für den Inhalt des Grauwasserbehälters 1 und die Filtereinrichtung 9 angeordnet. Die Belüftungseinrichtung 10 ist hier als sog. Tellerbelüfter ausgestaltet. Die Belüftungseinrichtung 10 wird über eine auf der Oberseite des Grauwasserbehälters 1 angeordnete Belüfterpumpe 11 gespeist. Dazu ist die Belüftungseinrichtung 10 über einen Schlauch mit der Belüfterpumpe 11 verbunden. Die Belüfterpumpe 11 befindet sich in einer speziellen Vorrichtung im oberen Bereich des Grauwasserbehälters 1. Diese Vorrichtung fixiert die Filtereinrichtung 9 mittels einem PE-Rohr am Boden des Grauwasserbehälters 1 und schützt die Belüfterpumpe 11 vor dem Grauwasser.

Im Grauwasserbehälter 1 findet in bereits beschriebener Art und Weise eine biologische Behandlung und Speicherung des Grauwassers statt. Dabei wird der Füllstand des Grauwassers stets durch einen Drucksensor 12, der über das PE-Rohr der Filtereinrichtungsfixierung direkt verbunden ist, überwacht. Bei einer Unterschreitung des Minimalstands 13 für den Grauwasserbehälter 1 wird der Filtrationsschritt automatisch gestoppt.

Ansonsten findet in erfindungsgemäßer Weise aufgrund des hydrostatischen Druckes der im Grauwasserbehälter 1 über der Filtereinrichtung 9 ausgebildeten Flüssigkeitssäule eine Filtration des biologisch behandelten Grauwassers statt. Ein Klarwasserablauf 14 sammelt das Klarwasser direkt in der Filtereinrichtung 9 und leitet dieses auf die Außenseite des Grauwasserbehälters 1, wo ein Magnetventil 15 den Filtrationsvorgang steuert. Ist das Magnetventil 15 geschlossen, bspw. sobald der Füllstand den Minimalstand 13 unterschreitet, findet keine Filtration und damit keine Ableitung von Klarwasser aus dem Grauwasserbehälter 1 statt.

Das aus dem Grauwasserbehälter 1 gewonnene Klarwasser wird über den Klarwasserablauf 14 in den oberen Bereich des Klarwasserbehälters 2 eingeleitet. Zur Vermeidung einer Überfüllung verfügt der Klarwasserbehälter 2 ebenfalls über einen Überlauf 16, der in den Kanalisationsanschluss 6 mündet. Zur Sicherheit ist ein zweiter Notüberlauf 17 gemäß DIN EN 1717 vorgesehen. Im oberen Bereich des Klarwasserbehälters 2 ist des Weiteren ein Magnetventil 18 angeordnet. Im Bodenbereich des Klarwasserbehälters 2 ist ein Ablaufhahn 19 mit Drucksensor angeordnet. Der Drucksensor misst den Füllstand im Klarwasserbehälter 2. Bei Überschreiten des Maximalstandes 20 für den Klarwasserbehälter 2 wird das Magnetventil 15 geschlossen und die Filtration gestoppt. Unterschreitet der Füllstand jedoch den Minimalstand 21, so wird über ein Hauswasseranschluss 22 Trinkwasser nachgefüllt. Des Weiteren ist etwa in der Mitte des Klarwasserbehälters 2 ein Füllstand definiert, bei dessen Unterschreiten Regenwasser aus einem entsprechenden Vorrat nachgefüllt werden kann.

Das aufbereitete und im Klarwasserbehälter 2 gespeicherte Klarwasser kann über eine Klarwasserentnahme 23 den jeweiligen Verbrauchsstellen zugeführt werden. Die Klarwasserentnahme 23 wird von der im Bodenbereich des Klarwasserbehälters 2 angeordneten Tauchpumpe 27 gespeist.

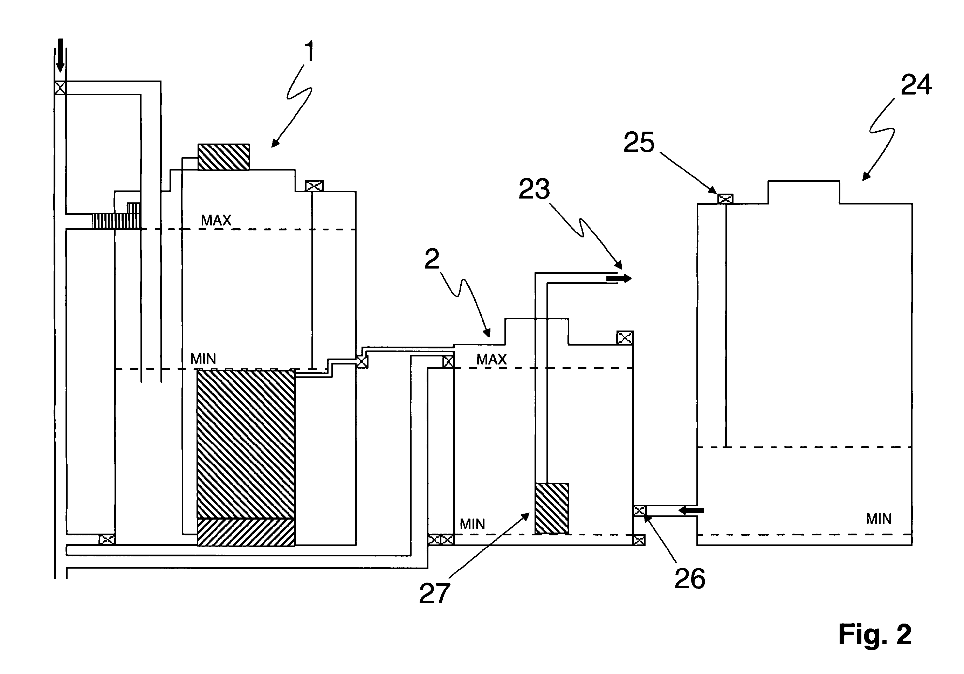

Fig. 2 zeigt die schematische Darstellung einer zweiten Ausführungsform der erfindungsgemäßen Vorrichtung, wobei hier zusätzlich zum Grauwasserbehälter 1 und zum Klarwasserbehälter 2 ein niveaugleicher, nämlich oberirdisch angeordneter Regenwasserbehälter 24 vorgesehen ist. So lässt sich nicht nur aufbereitetes Grauwasser als Brauch- bzw. Klarwasser nutzen, vielmehr kann in besonders vorteilhafter Weise auch gesammeltes Regenwasser einer sinnvollen Verwendung zugeführt werden. Der Regenwasserbehälter 24 verfügt an seiner Oberseite über einen Drucksensor 25, der über einen Schlauch den Füllstand im Regenwasserbehälter 24 misst. Unterschreitet der Füllstand im Regenwasserbehälter 24 ein vorher definiertes Minimum, kann ein Abfluss von Regenwasser in den Klarwasserbehälter 2 bzw. ein Abfluss des Grauwassers in den Regenwasserbehälter 24 verhindert werden, um ein unnötiges Nachspeisen zu verhindern.

Bei Unterschreiten eines definierten Füllstands im Klarwasserbehälter 2 kann das Magnetventil 26 für das Regenwasser geöffnet werden, so dass der Klarwasserbehälter 2 wieder befüllt wird. Des Weiteren übernimmt die Tauchpumpe 27 im Klarwasserbehälter 2 nicht nur die Förderung des Klarwassers zur Klarwasserentnahme 23, sondern dient zugleich als Druckerhöhungsanlage für das gesammelte Regenwasser, so dass im Regenwasserbehälter 24 auf eine weitere Pumpeinrichtung verzichtet werden kann.

Der Niveauausgleich zwischen Regenwasserbehälter 24 und Klarwasserbehälter 2 erfolgt bei geöffnetem Magnetventil 26 über den hydrostatischen Druck und wird über die Steuerung der Anlage zentral überwacht und gesteuert.

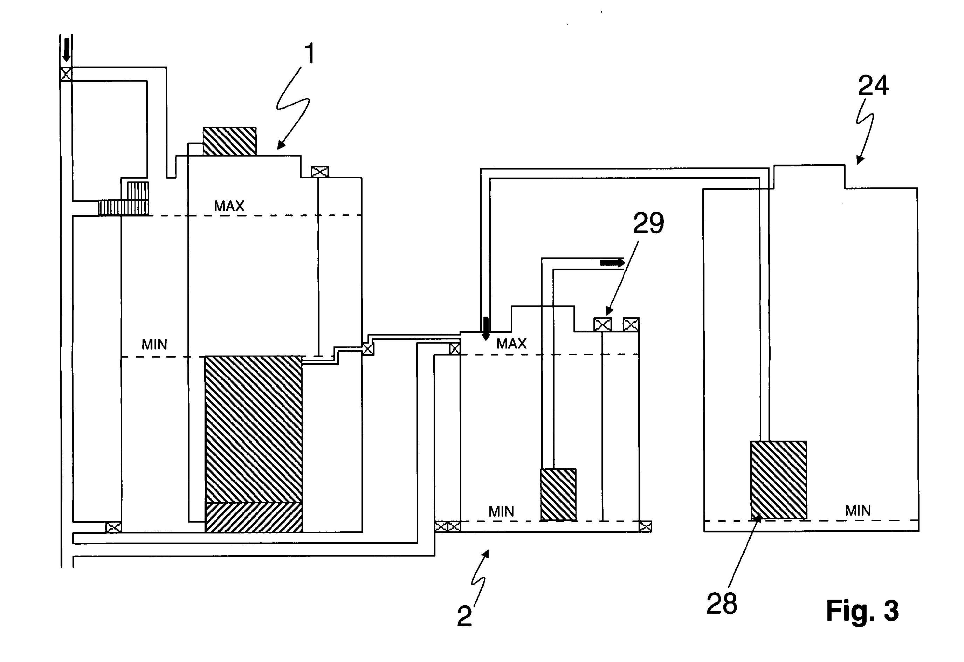

Fig. 3 zeigt eine dritte Ausführungsform der erfindungsgemäßen Aufbereitungsanlage. Hier ist ein unterirdisch angeordneter Regenwasserbehälter 24 vorgesehen, dessen Füllstand sich stets unterhalb des Füllstandes im Klarwasserbehälter 2 befindet. Dementsprechend ist hier auch im Regenwasserbehälter 24 eine Tauchpumpe 28 vorzusehen, welche das Regenwasser bei Bedarf in den Klarwasserbehälter 2 zu fördern vermag. Es kann für den Beginn der Förderung von Regenwasser in den Klarwasserbehälter 2 ein bestimmter Füllstand im Klarwasserbehälter 2 definiert werden, bei dessen Unterschreiten die Tauchpumpe 28 im Regenwasserbehälter 24 in Betrieb genommen wird. Am Klarwasserbehälter 2 ist ein auf der Oberseite angeordneter Drucksensor 29 vorgesehen. Sobald die obere Füllstandsmarke für die Regenwasser-NSP im Klarwasserbehälter 2 erreicht wird, deaktiviert die Anlagensteuerung die Tauchpumpe 28 im Regenwasserbehälter 24. Sinkt der Füllstand im Regenwasserbehälter 24 während einer Nachspeisung unter ein definiertes Minimum, deaktiviert sich die Tauchpumpe 28 im Regenwasserbehälter 24 automatisch.

Abschließend sei hervorgehoben, dass die voranstehend beschriebenen Ausführungsbeispiele der erfindungsgemäßen Vorrichtung die beanspruchte Lehre erörtern, diese jedoch nicht auf die Ausführungsbeispiele einschränken.

### Bezugszeichenliste

- 1: Grauwasserbehälter
- 2: Klarwasserbehälter
- 3: Grauwasserzulauf
- 4: Grobfilter
- 5: Überlaufbogen
- 6: Kanalisationsanschluss
- 7: Maximalstand (Grauwasserbehälter)
- 8: Auslaufhahn
- 9: Filtereinrichtung
- 10: Belüftungseinrichtung
- 11: Belüfterpumpe
- 12: Drucksensor (Grauwasserbehälter)
- 13: Minimalstand (Grauwasserbehälter)
- 14: Klarwasserablauf
- 15: Magnetventil
- 16: Überlauf (Klarwasserbehälter)
- 17: Notüberlauf
- 18: Magnetventil (Klarwasserbehälter)
- 19: Ablaufhahn (Klarwasserbehälter)
- 20: Maximalstand (Klarwasserbehälter)
- 21: Minimalstand (Klarwasserbehälter)
- 22: Hauswasserwerk-Anschluss
- 23: Klarwasserentnahme
- 24: Regenwasserbehälter
- 25: Drucksensor (Regenwasserbehälter)
- 26: Magnetventil (Regenwasser)
- 27: Tauchpumpe (Klarwasserbehälter)
- 28: Tauchpumpe (Regenwasserbehälter)
- 29: Drucksensor (Klarwasserbehälter)

## Patentansprüche

1. Verfahren zur Aufbereitung von Grauwasser zu Klarwasser, wobei das Grauwasser zunächst einer Behandlung, insbesondere einer biologischen Reinigung, und darauf folgend einem Filtrationsschritt unterzogen wird,
**dadurch gekennzeichnet, dass** der Filtrationsschritt unter Nutzung des hydrostatischen Druckes des gespeicherten und/oder behandelten Grauwassers erfolgt.

2. Verfahren nach Anspruch 1, **dadurch gekennzeichnet, dass** der Filtrationsschritt alleine unter Nutzung des hydrostatischen Druckes des gespeicherten und/oder behandelten Grauwassers erfolgt.

3. Verfahren nach Anspruch 1 oder 2, **dadurch gekennzeichnet, dass** die Behandlung eine biologische Reinigungsstufe, insbesondere eine aerobe biologische Behandlung, aufweist.

4. Verfahren nach einem der Ansprüche 1 bis 3, **dadurch gekennzeichnet, dass** das aufzubereitende Grauwasser zunächst zur Speicherung und/oder Behandlung in einen Grauwasserbehälter (1) eingeleitet wird und dass ein Grauwasserbehälter (1) verwendet werden kann, in dessen Innenraum, insbesondere im unteren Bereich, eine Filtereinrichtung (9) angeordnet ist, wobei nach dem Filtrationsschritt erhaltenes Klarwasser direkt aus dem Grauwasserbehälter (1), insbesondere aus einer dort angeordneten Filtereinrichtung (9), entnommen und auf die Außenseite des Grauwasserbehälters (1) geleitet werden kann.

5. Verfahren nach einem der Ansprüche 1 bis 4, **dadurch gekennzeichnet, dass** das aufzubereitende Grauwasser vor der Speicherung und/oder Behandlung durch einen Vor- oder Grobfilter (4), insbesondere mit einer Siebnennweite von >1mm, geleitet wird.

6. Verfahren nach einem der Ansprüche 1 bis 5, **dadurch gekennzeichnet, dass** der Filtrationsschritt eine Mikrofiltration oder eine Ultrafiltration aufweist.

7. Verfahren nach einem der Ansprüche 1 bis 6, **dadurch gekennzeichnet, dass** das gespeicherte und/oder zu behandelnde und/oder behandelte Grauwasser und/oder eine für den Filtrationsschritt verwendete Filtereinrichtung (9) belüftet werden.

8. Verfahren nach einem der Ansprüche 1 bis 7, **dadurch gekennzeichnet, dass** die Filtration erst nach Abschluss der Behandlung durchgeführt wird und/oder dass der Filtrationsschritt in regelmäßigen Abständen unterbrochen wird.

9. Verfahren nach einem der Ansprüche 1 bis 8, **dadurch gekennzeichnet, dass** das Klarwasser in einen Klarwasserbehälter (2) geleitet und gespeichert wird, wobei dem Klarwasserbehälter (2) zusätzlich Regenwasser, insbesondere aus einem Regenwasserbehälter (24), und/oder Trinkwasser, insbesondere aus dem Trinkwassernetz und ggf. gemäß DIN EN 1717, zugeführt werden kann und/oder wobei Klarwasser aus dem Klarwasserbehälter (2) durch eine im Innenraum, insbesondere auf dem Boden, des Klarwasserbehälters (2) angeordnete Tauchpumpe (27) gefördert werden kann.

10. Vorrichtung zur Aufbereitung von Grauwasser zu Klarwasser, insbesondere zur Durchführung eines Verfahrens nach einem der Ansprüche 1 bis 9, mit einem Grauwasserbehälter (1) zur Speicherung und/oder Behandlung, insbesondere der biologischen Behandlung, von Grauwasser, und einer Filtereinrichtung (9) für das ggf. behandelte Grauwasser,
**dadurch gekennzeichnet, dass** die Filtereinrichtung (9) unter Nutzung des hydrostatischen Druckes im Grauwasserbehälter (1) betreibbar ist.

11. Vorrichtung nach Anspruch 10, **dadurch gekennzeichnet, dass** die Filtereinrichtung (9) alleine unter Nutzung des hydrostatischen Druckes im Grauwasserbehälter (1) betreibbar ist und/oder dass die Filtereinrichtung (9) im Innenraum des Grauwasserbehälters (1), insbesondere in dessen Bodenbereich, angeordnet ist und/oder dass die Filtereinrichtung (9) einen Mikro- oder Ultrafilter aufweist.

12. Vorrichtung nach Anspruch 10 oder 11, **dadurch gekennzeichnet, dass** im Grauwasserbehälter (1) eine Behandlung, insbesondere eine biologische Reinigung, durchführbar ist und/oder dass im Grauwasserbehälter (1), insbesondere im Zulauf (3) für das Grauwasser, ein Vor- oder Grobfilter (4), insbesondere mit einer Siebnennweite von >1mm, angeordnet ist.

13. Vorrichtung nach einem der Ansprüche 10 bis 12, **gekennzeichnet durch** einen mit dem Grauwasserbehälter (1) korrespondierenden Klarwasserbehälter (2) zur Speicherung des Klarwassers, wobei der Klarwasserbehälter (2) ggf. eine im Innenraum, insbesondere auf dem Boden, angeordnete Tauchpumpe (27) zur Förderung des Klarwassers aufweist, wobei der Klarwasserbehälter (2) einen Anschluss (22) für die Zumischung von Trinkwasser, insbesondere gemäß DIN EN 1717, aufweisen kann, und insbesondere an das Trinkwassernetz angeschlossen ist.

14. Vorrichtung nach einem der Ansprüche 10 bis 13, **gekennzeichnet durch** einen mit dem Klarwasserbehälter (2) korrespondierenden Regenwasserbehälter (24) zur Speicherung von Regenwasser.

15. Vorrichtung nach einem der Ansprüche 10 bis 14, **dadurch gekennzeichnet, dass** zur Bestimmung der jeweiligen Pegelhöhe ein oder mehrere Drucksensoren (12, 25, 29) im oder am Grauwasserbehälter (1) und/oder Klarwasserbehälter (2) und/oder Regenwasserbehälter (24) angeordnet sind.
